# EUROPEAN PATENT APPLICATION

(11) **EP 2 385 480 A1**
(43) Date of publication of application: **09.11.2011**
(21) Application number: 11003553.2
(22) Date of filing: 02.05.2011
(51) Int. Cl.: G06K 7/10, H04M 1/2755

(54) **Method for controlling a communication device, communication device, system, and computer program product**

(30) Priority: 05.05.2010 EP 10004739; 05.05.2010 US 331492 P
(71) Applicant: Deutsche Telekom AG, 53113 Bonn (DE)
(72) Inventor: Klatt, Axel, 50996 Cologne (DE)
(74) Representative: Schwöbel, Thilo K.

(57) **Abstract**

The invention related to a method for the configuration of a communication device, a communication device, a system for the configuration of a communication device, and a computer program product comprising a computer-readable storage medium, wherein the communication device is in communication with an image capture device, wherein the communication device comprises a data processor, wherein a plurality of images comprising a visual code is captured by the image capture device, wherein the visual code of the plurality of images is decoded by a decoding application that is executed by the data processor, wherein the visual code of the plurality of images control at least partly the configuration of the communication device.

## Description

### BACKGROUND

The present invention relates to a method for controlling a communication device by means of capturing at least one image comprising a visual code. The invention further relates to a communication device, to a system for controlling a communication device, and to a computer program product comprising a computer-readable storage medium.

Communication devices such as mobile communication devices, e.g. handheld communication devices, often need to be configured for a specific purpose, e.g. providing the settings for using a radio network, a specific node in the operators network (e.g. an "Access Port Name" ("APN") like "internet.t-mobile.de"/"ims.t-mobile,de" etc) and/or providing the settings for a specific task such as being used e.g. as a remote control of a home entertainment system and/or as a pointing device for a presentation or the like.

The transmission of configuration data or configuration information as well as correctly inputting the configuration data or configuration information by the user, e.g. by means of entering a specific menu structure and changing specific settings at a plurality of different location in the menu structure, is often cumbersome and not user friendly, especially for such users whose primary goal is to use the communication device and not to configure (or change the configuration of) the communication device. Additionally, such configuration tasks are often error prone due to incorrect instructions and/or incorrect transmission of configuration instructions.

A prominent example of a configuration task of a communication device is to gain access to a Wireless LAN (WLAN) network. Typically a set of at least two parameters is required for access to protected WLANs: the Service Set Identifier (SSID) of the WLAN and the security configuration such as a Wi-Fi Protected Access Key (either WPA/WPA2). Without such a configuration of these at least two parameters the terminal cannot have access to a particular WLAN network requiring authentication.

Typically private or enterprise WLANs operate in the so-called "PSK mode". "PSK" means pre-shared key and requires the configuration of a WPA/WPA2 key in the WLAN router / access point (AP) as well as in the terminal client. This method is call pre-shared key method as the key needs to be pre-shared with each terminal client which shall have access to the secured WLAN. The pre-shared key (PSK) is sometimes already configured and activated at point of manufacturing but it can be customised by changing the key inside the WLAN router / AP and distribute it manually to any of the terminal clients which should have access to the WLAN. Today telecommunication operators, like Deutsche Telekom, selling WLAN equipment have pre-configured an individual pre-shared key in their WLAN equipment at manufacturing to promote securing also private WLAN in contrast to earlier days, where WLAN security was per default disabled and required manual configuration by the end customers.

In order to allow access for a particular terminal client to a particular WLAN router / Access Point, the pre-shared key of the WLAN router / Access Point must be provided manually to each and every terminal client. A typical installation process for a WLAN involves several steps: Configuration of a pre-shared key inside the WLAN router / AP (if the pre-configured key from the manufacturer should be changed), distribution of the (new) pre-shared key to any terminal client user, configuration of the pre-shared key to each terminal client in the software setup, activation of the pre-shared key for the access to the WLAN router /AP.

Another example where a pre-configuration of parameters for access rights is required, is the so-called "closed subscriber group" (CSG) concept for 3GPP based femtocells of Rel-8 [www.3GPP.org]. In order to allow a cellular terminal to have access to a particular CSG cell (also known as femtocell), the terminal needs to be configured with the CSG identity in a particular terminal internal list. The application of the proposed method is also applicable to this kind of network / terminal configuration and further detailed below.

Further cellular operators typically offer so-called "prepaid contracts" to their customer. The user utilised a prepaid credit for the calling cost. There are several methods to transfer money into the personal account. A widespread method is the selling of cards at the point of sale (POS) which contains a long number to be put manually into the telephone to load money onto the account. One such concept is called "XtraCash" of Deutsche Telekom. In order to simplify also this procedure the proposed method can also be used for pre-paid cellular contracts.

The objective of the present invention is to simplify the configuration of communication devices, especially the configuration of access parameters by avoiding manual interaction, especially to avoid that the end customer is required to put in several parameters like SSID and or pre-shared key (or CSG ID) manually. Especially if the pre-shared key is a long text/symbol/number string it is a source of error by typing it in a user interface manually. Other applications include complex configurations of a communication device such that a specific functionality can be easily realized without complex operations on either a menu structure of the communication device and/or on a registry structure of the communication device and/or on a configuration file structure.

### SUMMARY

The object of the present invention is to provide a method, a communication device, a system, and a computer program product for controlling a communication device in a simple and easy manner, e.g. the configuration of parameters required to gain access to a network or the like. The invention specifically relates to the configuration for providing access to a WLAN network (which typically requires to type in a pre-shared WLAN key into a terminal client by utilising a printed version of the pre-shared key (provided by the manufacturer/seller) and / or other parameters to identify such a network, such as an SSID for WLAN or a CSG ID / "Home NodeB name" for cellular "closed subscriber group" femtocells), an arrangement and a system or program to take a picture of any of the parameter required to gain access to the network, in from of either a text printout or a barcode of the required configuration parameters, the decoding of the information contained in the text form or preferably in barcode format and the automated information exchange to the terminal client for access to protected network.

The object of the present invention is achieved by a method for configuring or controlling a communication device, wherein the communication device is in communication with an image capture device, wherein the communication device comprises a data processor, wherein a plurality of images or a three dimensional image comprising a visual code is captured by the image capture device, wherein the visual code of the plurality of images or of the three dimensional image is decoded by a decoding application that is executed by the data processor, wherein the visual code is used to control at least partly the configuration of the communication device or wherein the visual code comprises computer-readable commands used to control the communication device.

Furthermore, the object of the present invention is solved by a method for controlling a communication device, wherein the communication device is in communication with an image capture device, wherein the communication device comprises a data processor, wherein a plurality of images comprising a visual code is captured by the image capture device, wherein the visual code of the plurality of images is decoded by a decoding application that is executed by the data processor, wherein the visual code comprises computer-readable commands used to control the communication device, wherein the plurality of images are displayed at least partly concurrently, and wherein the plurality of images that are displayed concurrently are captured either by moving the image capture device of the communication device or by processing a still image comprising the plurality of images.

According to the present invention, it is thereby advantageously possible to transfer a sufficiently large amount of data to the communication device in order to enable complex configuration tasks of the communication device and/or to enable to control the communication device in a complex manner, e.g. by transferring lines of code to the communication device.

According to the present invention, it is furthermore advantageously possible to transfer computer-readable commands such that complex configuration tasks or control tasks of the communication device are easily performed.

It is preferred according to the present invention that the visual code of the plurality of images comprises computer-readable commands such that the configuration of the communication device is controlled by the computer-readable commands.

Thereby, it is advantageously possible to execute a comparably large variety of different configuration tasks by means of the inventive method.

According to the present invention, it is furthermore preferred that the display of the plurality of images is provided such that at least partly, images are displayed sequentially (especially in the form of a video sequence) on a display device of a further communication device and/or that the plurality of images is displayed at least partly concurrently.

This provides a wide variety of possible sources of the image information providing the visual code. For example, it is possible according to the present invention that the display device of a further communication device sequentially displays many images such that the image capture device of the communication device or linked to the communication device is able to capture these images individually, store these images in a memory device and process the images for retrieving the image code. It is also advantageously possible that the communication device records the plurality of images in the form of a video sequence (i.e. requiring the initiation of only one image capture step to a user of the inventive method) such that the plurality of images are captured or recorded by the communication device in only one step.

According to the present invention, it is possible and preferred that the plurality of images are displayed concurrently and (at least partly) sequentially. According to such a variant of the present invention,
-- in a first point in time, a plurality of images are displayed concurrently (i.e. simultaneously), and
-- in a second point in time, at the location of at least one of these images (displayed concurrently or simultaneously in the first point of time) another image is displayed such that it is able for the image capture device to record or otherwise capture the information content of the plurality of images displayed in the first point in time as well as the at least one image displayed in the second point in time. According to the present invention, this is possible by moving the image capture device.

It is furthermore advantageous to display the plurality of images comprising the visual code in a manner which is not sequential but parallel (in time). This means, that a plurality of images are displayed on a display device of sufficient size in parallel, i.e. for example adjacent to one another. Displaying a plurality of images in such a manner parallel on, e.g., an electronic display means (or on a printed medium such as a newspaper or a magazine or another printed article) also provides the possibility of conveying more information (coded in the visual code) compared to a single two-dimensional code. According to the inventive method, it is advantageously possible that such a display of the plurality of images in parallel is captured by means of the communication device recording the plurality of images in the form of either one still image or a plurality of still images or in the form of a video sequence (i.e. requiring the initiation of only one image capture step to a user of the inventive method) such that the plurality of images are captured or recorded by the communication device in only one step. The alternative of capturing one single still image is possible in case that the image capture device is provided with an image resolution sufficient to capture the plurality of images (displayed in parallel or concurrently or simultaneously) at once. The alternative of taking (or capturing) a plurality of still images refers to the situation where the plurality of still images (of the plurality of images comprising the visual code) are taken sequentially. In this alternative, the plurality of still images can either be processed sequentially (i.e. one still image and a corresponding image (or images) comprising (part of) the visual code) or the plurality of still images can be processed in parallel by an application capable of a parallel processing of these still images. The alternative of capturing a video sequence is possible in case that the image capture device or the communication device is provided with a software such that the plurality of images displayed in parallel can be obtained from the recorded video sequence. Furthermore alternatively, a plurality of still images are taken for capturing the plurality of images displayed in parallel or concurrently. Both in case of taking (or capturing) a plurality of still images and in case of capturing a video sequence (of the at least temporarily static plurality of concurrently displayed images comprising the visual code), the image capture device of the communication device is moved physically, i.e. a relative movement of the image capture device and the display of the plurality of concurrently displayed images is necessary (either by moving the image capture device while the display of the images being fixed or by moving the display of the images and the image capture device being fixe or by moving both the image capture device and the display of the images). In case of capturing one single still image, no physical movement (or relative movement) is required. Instead, the physical movement is replaced or simulated by a (sequential or parallel) processing of the image information (i.e. inter alia the plurality of images comprising the visual code) contained in the single still image.

According to the present invention, it is also preferred that a plurality of images are displayed in parallel and further images are displayed sequentially, i.e. in a first display state (or first point in time) of the sequence, a plurality of images are displayed in parallel and in a second display state (or second point in time) of the sequence, a further plurality of images are displayed in parallel, thereby even further increasing the capacity of information that are able to be conveyed by the inventive method. In case of such an alternative of displaying the plurality of images both in parallel and sequentially, the image capture devices of the communication device or assigned to the communications devices preferably needs to feature a sufficiently high resolution such that the plurality of images displayed in parallel (i.e. in one point of time) can be captured at once.

Alternatively, the images comprising the visual code can also be printed on a page of a newspaper or a magazine.

According to the present invention, the plurality of images comprise the visual code, preferably in the form of a two dimensional visual representation comprising two colors, e.g. black and white. Such a two dimensional visual representation can be provided, e.g. in the form of a SEMA code and/or in the form of a QR-code and/or in the form of a DMC 2D code. The images are captured by the image capture device of the communication device. Alternatively, it is also possible according to the present invention that the images, at least partly, comprise a one-dimensional visual representation of the visual code, i.e. a conventional bar-code. It is also possible, that the plurality of images comprise the visual code in the form of a two-dimensional color code, i.e. the coded information are represented by means of more than two colors such as, e.g. the High Capacity Color Barcode (HCCB-code). By processing the data corresponding to the images by means of the data processor of the communication device, the information content of the visual code is transferred or input to the communication device. Alternatively to using a two-dimensional code (e.g. a two-dimensional black and white barcode or a two-dimensional color barcode), it is possible according to the present invention to use a one dimensional (bar) code or, preferably, a three-dimensional representation of the visual code, e.g. a barcode to encode the visual code content. A three-dimensional image is, e.g. obtained by means of a representation of a three-dimensional structure such that the three-dimensional structure can be captured by the image capture device. An example of the three-dimensional structure is a hologram structure. Further examples of the representation of a three-dimensional structure include the display of the three-dimensional structure on a 3D enabled display device such that an appropriate (3D enabled) image capture device is able to capture the three-dimensional structure and decode the visual code.

Of course, it is possible and preferred according to the inventive method of the present invention that not only one three-dimensional image is captured but a plurality of three-dimensional images is captured by the image capture device to obtain the visual code. Preferably, this can also be done by means of the communication device recording the plurality of images in the form of a video sequence (i.e. requiring the initiation of only one image capture step to a user of the inventive method) such that the plurality of images are captured or recorded by the communication device in only one step.

According to preferred embodiments of the present invention, the image capture device is a camera device that is either integrated with the communication device or at least integrated in the same assembly, e.g. an housing. Alternatively, it is possible according to the present invention that the image capture device is not integrated in the housing of the communication device but detached from that housing and linked, e.g. by wireline, to the communication device.

It is preferred according to the present invention that the computer-readable commands are configuration macros according to a configuration macro language. Alternatively, it is also preferred according to the present invention that the computer-readable commands are lines of programming language code such as lines of Python-Code and/or lines of Java-Code and/or lines of JScript-Code. Thereby, it is advantageously possible to transfer complete programs, i.e. code portions comprising complete programming language scripts or programming language programs to the communication device.

Furthermore, it is preferred according to the present invention that the communication device comprises a memory device for storing at least one out of a menu structure, a registry structure, and a configuration file, wherein the configuration of the communication device is defined by the state of the memory device, and wherein the computer-readable commands are used to modify the state of the memory device for defining a configuration of the communication device.

Thereby, it is advantageously possible not only to transfer configuration data but also to transfer configuration or control commands such that comparably complex configuration tasks are possible to be performed.

The present invention also relates to a communication device, wherein the communication device is in communication with an image capture device, wherein the communication device comprises a data processor, wherein a plurality of images comprising a visual code is captured by the image capture device or wherein a three-dimensional image comprising a visual code is captured by the image capture device, wherein the visual code is decoded by a decoding application that is executed by the data processor, wherein the visual code is used to control at least partly the configuration of the communication device or wherein the visual code comprises computer-readable commands usable to control the communication device.

Furthermore, the present invention relates to a communication device, wherein the communication device is in communication with an image capture device, wherein the communication device comprises a data processor, wherein a plurality of images comprising a visual code is captured by the image capture device, wherein the visual code is decoded by a decoding application that is executed by the data processor, wherein the visual code comprises computer-readable commands usable to control the communication device, wherein the communication device is provided such that a concurrent representation of at least part of the plurality of images is captured either by moving the image capture device of the communication device or by processing a still image comprising the plurality of images.

By means of using a plurality of images comprising the visual code or by means of using a three-dimensional image comprising the visual code or by means of using a plurality of three-dimensional images comprising the visual code, it is advantageously possible according to the present invention to input more data into the communication device.

Preferably, the communication device comprises a memory device for storing at least one out of a menu structure, a registry structure, and a configuration file, wherein the configuration of the communication device is defined by the state of the memory device, and wherein the computer-readable commands are used to modify the state of the memory device for defining a configuration of the communication device.

The present invention also relates to a system for configuring or controlling a communication device, wherein the system comprises a further communication device comprising a display device, wherein the communication device is in communication with an image capture device, wherein the communication device comprises a data processor, wherein a plurality of images comprising a visual code or a three-dimensional image comprising a visual code is displayed by the display device and captured by the image capture device, wherein the visual code is decoded by a decoding application that is executed by the data processor, wherein the visual code is used to control at least partly the configuration of the communication device or wherein the visual code comprises computer-readable commands used to control the communication device.

Furthermore, the present invention also relates to a system for controlling a communication device, wherein the system comprises a further communication device comprising a display device, wherein the communication device is in communication with an image capture device, wherein the communication device comprises a data processor, wherein a plurality of images comprising a visual code is displayed by the display device and captured by the image capture device, wherein the visual code is decoded by a decoding application that is executed by the data processor, wherein the visual code comprises computer-readable commands used to control the communication device, wherein the communication device is provided such that a concurrent representation of at least part of the plurality of images is captured either by moving the image capture device of the communication device or by processing a still image comprising the plurality of images.

Thereby, it is possible to easily transfer data from the further communication device to the communication devices via the image capture device.

A further subject of the present invention is a computer program product comprising a computer-readable storage medium having computer-readable program instructions embodied in the medium for executing an inventive method according to the present invention or for controlling an inventive communication device according to the present invention.

### BRIEF DESCRIPTION OF THE DRAWINGS

Figure 1 schematically illustrates a system for the configuration of a communication device, the system comprising the communication device and a further communication device.

Figure 2 schematically illustrates an image comprising a visual code.

Figures 3 and 4 schematically illustrate a plurality of images comprising a visual code.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

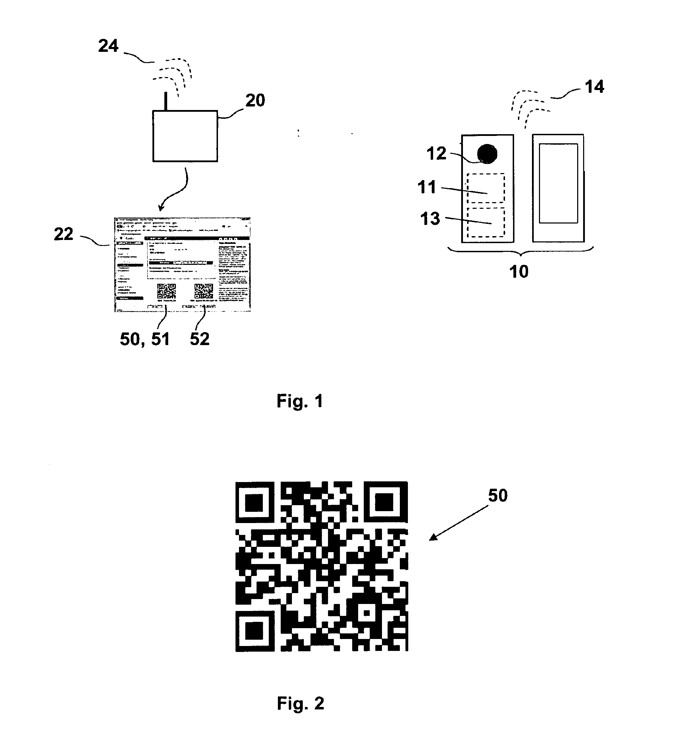

Figure 1 schematically shows a system for the configuration of a communication device 10, the system comprising the communication device 10 and a further communication device 20. The communication device 10 is represented on the right hand side of Figure 1 and the further communication device 20 is represented on the left hand side of Figure 1. The communication device 10 is represented with its front side (depicted on the right hand side of the representation of the communication device 10 in Figure 1) and with its back side (depicted on the left hand side of the representation of the communication device 10 in Figure 1). The communication device comprises a data processor 11, a memory device 13 and an image capture device 12, especially a camera, e.g. a still camera or a video camera. Furthermore, the communication device 10 comprises an interface 14 for communication via preferably a radio link, e.g. a WLAN (Wireless Local Area Netwok) connection, and/or a Wi-Fi (Wireless Fidelity) connection, and/or a Bluetooth connection, and/or an WWAN (Wireless Wide Area Network) connection such as a (cellular) mobile radio communications network, .e.g. according to the Global System of Mobile Communication (GSM)-standard and/or according to the Universal Mobile Telecommunication System (UMTS) standard, and/or according to the Long Term Evolution (LTE) (or LTE-Advanced (LTE-A))standard, and/or according to the cmda2000 standard, and/or according to the WiMAX standard. Alternatively, also an nearfield Infrared/Bluetooth/DECT/Wireless USB/RF ID connection can be provided by the interface 14.

The system for the configuration of the communication device 10 further comprises a further communication device 20. The further communication device 20 comprises a further interface 24 for communication with the interface 14 for communication of the communication device 10 (i.e. the communication device 10 and the further communication device preferably communicate via preferably a radio link according to one or a plurality of the a.m. technologies or standards.

The inventive method for controlling the communication device 10 or for configuring the communication device 10 provides for a transmission of data from the further communication device 20 to the communication device. In order to realize such a transfer, the further communication device 20 comprises according to a first embodiment of the present invention a display device 22 for displaying one image 50 or a plurality of images. 51, 52. The image 50 or images 51, 52 comprise a visual code 60, preferably in the form of a two dimensional visual representation comprising two colors, e.g. black and white, or a plurality of colors. The image 50 or plurality of images 51, 52 can be provided in the form of a three-dimensional image 50 or of a plurality of three-dimensional images 51, 52. A three-dimensional image is, e.g., obtained by means of a representation of a three-dimensional structure such that the three-dimensional structure can be captured by the image capture device 12. An example of the three-dimensional structure is a hologram structure. Further examples of the representation of a three-dimensional structure include the display of the three-dimensional structure on a 3D enabled display device as the display device 22 such that an appropriate (3D enabled) image capture device 12 is able to capture the three-dimensional structure and decode the visual code.

Alternatively to the display device 22 being provided integrated in the further communication device 20, it is possible and preferred according to the present invention that the display device 22 is only assigned to the further communication device 20, i.e. the display device 22 of another hardware is used as an external display device 22 of the further communication device 20, the further hardware device being connected to the further communication device 20 (such as a connected media box like Deutsche Telekom's IPTV Media Receiver, a connected TV device or any other connected device comprising a display (i.e. integrated in a smart-home control infrastructure)). Preferably, the further communication device 20 is a router device, e.g. a WLAN-router device (i.e. a router device featuring WLAN capabilities (Wireless Local Area Network capabilities) and preferably providing internet access to connected devices.

According to the present invention, it is preferred that the further communication device 20 comprises a button or another user interaction element which causes the image 50 or the plurality of images 51, 52 (comprising the visual code 60) to be displayed on the display device 22. In case that the further communication device 20 is connected to the internet, it is also possible that the image 50 or the plurality of images 51, 52 are caused to be displayed on the display device 22 by means of a command received by the further communication device 20 via internet, the command being generated on a request (e.g. by the internet service provider), the request being sent by the communication device 10, especially via a mobile radio communication infrastructure, i.e. not via the further communication device 20.

The two-dimensional visual representation can be provided, e.g. in the form of a SEMA code and/or in the form of a QR-code and/or in the form of a DMC 2D code. Alternatively to using a two-dimensional code, it is possible according to the present invention to use a one dimensional (bar) code. The image 50 is captured or the images 51, 52 are captured by the image capture device 12 of the communication device 10. By processing the data corresponding to the image 50 or to the images 51, 52 by means of the data processor 11 of the communication device 10, the information content of the visual code 60 is transferred to the communication device 10.

Alternatively to providing a complete system for controlling the communication device 10 (i.e. including also the further communication device 20 having the display device 22), it is also possible according to the present invention that another display means is used by the (image capture device 12 of the) communication device 10 to input the information content of the visual code 60. This means that the image 50 or images 51, 52 can also be stored or printed on a support such as a newspaper paper and/or on another paper such as a magazine or also a letter received by an operator requiring a specific configuration of the communication device 10 to be performed prior to using the operators services.

For example, the further communication device 20 is a WLAN router or an Access Point which is configured to be protected by SSID and PSK and provides a QR-code version of the configured parameters. For example, the communication device 10 is a telephone such as a smartphone with camera capabilities to take a picture of the provided QR-code; as an alternative or addition to provide the QR-code based on a printed form the figure also illustrates the provision of the configured parameters in form of a QR-code inside the WLAN configuration menu.

Figure 2 schematically illustrates an image 50 comprising the visual code 60. The visual code 60 can be retrieved by the communication device 10 by means of data processing the image data by the data processor 11 according to an algorithm for analysing the image 50, especially a two dimensional code.

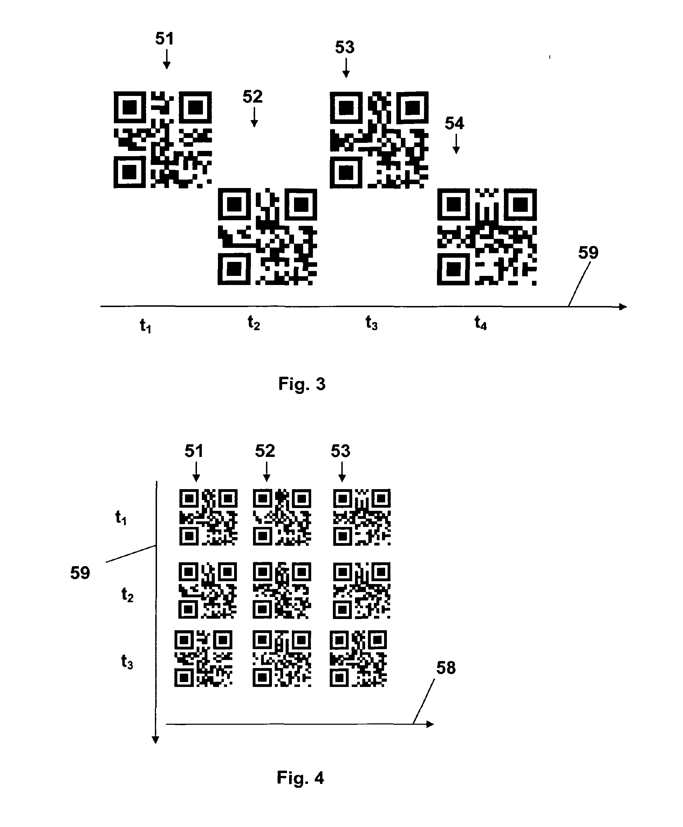

Figure 3 schematically illustrates a plurality of images 51, 52, 53, 54 comprising the visual code 60. The visual code 60 can be retrieved by the communication device 10 by means of data processing the data of the plurality of images 51, 52, 53, 54 by the data processor 11 according to an algorithm for analysing the images 51, 52, 53, 54 especially a two dimensional code. As is schematically represented in Figure 3 by means of a timeline 59, the images 51, 52, 53, 54 are changing in time. Thereby, they contain different information content and are therefore able to transfer more information to the communication device 10. The different images 51, 52, 53, 54 can be displayed at the same location on the display device 22 of the further communication device 20 (i.e. at a first point in time (represented by reference sign t₁ in figure 3), a first image 51 is displayed at a given location, at a second point in time t₂, a second image 52 is displayed at the same given location, at a third point in time t₃, a third image 53 is displayed at the same given location, and at a fourth point in time t₄, a fourth image 54 is displayed at the same given location) or they can be displayed at different locations of the display device 22 of the further communication device 20 (i.e. at the first point in time t₁, the first image 51 is displayed at a given first location, at a second point in time t₂, a second image 52 is displayed at given second location, at a third point in time t₃, a third image 53 is displayed at a given third location, and at a fourth point in time t₄, a fourth image 54 is displayed at a given fourth location, wherein the second location might vary from the first location, wherein the third location might vary or be identical to the first location, and wherein the fourth location may vary or be identical to the second location).

In Figure 4, another example of a representation of a plurality of images 51, 52, 53 comprising a visual code is schematically shown. In Figure 4, also a timeline 59 is shown indicating that at different points in time (t₁, t₂, t₃), different images comprising a visual code are displayed. Figure 4 shows a situation where the plurality of images 51, 52, 53 is displayed concurrently at a given point in time. Reference sign 58 indicates the location of the plurality of images, i.e. at each given point in time t₁, t₂, t₃, there are (in the example given) three different images 51, 52, 53 which are displayed necessarily at different locations in space. According to the present invention, it is provided for that at each given point in time, the image capture device 12 is able record the plurality of images 51, 52, 53:
-- by taking (or capturing) a plurality of still images covering the different locations of the plurality of images 51, 52, 53, or
-- by capturing a video sequence covering the different locations of the plurality of images 51, 52, 53, or
-- by capturing the plurality of images 51, 52, 53 displayed in parallel or concurrently by one single still image.
The first two of these alternatives relate to providing a relative movement between the image capture device 12 and the plurality of images 51, 52, 53, i.e. typically moving the image capture device 12, e.g., in front of a display device displaying the plurality of images 51, 52, 53 such all the locations of the plurality of images 51, 52, 53 (displayed at a given point in time) are covered. The third alternative does not relate to a physical movement (or relative movement) between the image capture device 12 on the one hand and the plurality of images on the other hand but an analogous processing (or a processing) of the information of the still image such that the physical movement is replaced or simulated by a (sequential or parallel) processing of the image information contained in the single still image (taken for each point in time). Examples of such an analogous processing comprises the search for a multitude of different images 51, 52, 53 within the information of the single still image such that also a plurality of images comprising a visual code is able to be performed.

As a first embodiment of the present invention the application for a configuration to access a secured WLAN network is described. For this - in order to get access - the communication device 10 (e.g. a terminal client) needs to be configured with at least the SSID and the pre-shared WPA/WPA2 key of the further communication device 20 (e.g. a WLAN router / Access Point). In order to avoid the manual configuration efforts it is proposed that especially for, but not limited to, smartphones as communication devices 10 a software program / application is provided which allows the user to use the image capture device 12 (e.g. the build-in camera) to take a picture of the image 50 (or the plurality of images 51, 52, ...), e.g. a QR-code containing the required access parameters like SSID and PSK, to allow the program / application to decode the visual code 60 information coded in the QR-code and to configure the client software of the communication device 10 (e.g. a terminal) with the parameters provided, i.e. contained in the visual code 60.

The image 50 or images 51, 52, 53, 54 can be provided (e.g. by a manufacturer or a seller) either in the user manual, on the selling package or as a sticker on e.g. the back of the further communication device 20.

If the customer desires to change the information content of the image 50 or images 51, 52 to personal values, it is possible according to the present invention that corresponding changes are input to the further communication device 20 such that a modified image 50 or images 51, 52 can be displayed on the display device 22 and transferred to the communication device 10. The inputting of the changed values can be provided by an external wired connection to the further communication device (e.g. a WLAN router). In this variant it is preferably proposed that the configuration menu of the further communication device 20 configuration software provides a generator application for generating the image 50 or images 51, 52 (e.g. a QR-code generator) in order to display the image. The customer can use this automatically generated and displayed image (e.g. from any computer / notebook display).

Other distribution ways of the QR-code might be considered such as a printout or display to gain access to protected, but public WLAN networks (like in cafes, hotels, fairs etc.). Such stickers or displays can be used for advertising, but preferably with the QR-code photo method of this invention be changed simply on e.g. a per day basis, as configuration for the customer is quite simple without manual interaction except for taking a single picture.

Another embodiment of the present invention relates to the configuration for access to a so-called Closed Subscriber Group femtocell (CSG), as being standardised in Rel-8 of 3GPP. In order to gain access to a CSG cell the cellular mobile phone is required to either in an initial setup step search manually for available CSG cells and try to access the chosen CSG cell. If the access is granted, the terminal store the identity of the CSG - the CSG identity being a 28 bit string - inside the terminal for further network access. The problem of this kind of manual configuration becomes visible if multiple CSG cells are available for selection by the terminal. In this case a pre-configuration of the allowed CSG ID (e.g. of the own private CSG cell) simplifies the search process for the terminal significantly. So in order to also simplify this configuration a QR-code for a CSG cells is provided similar to the provision of the parameters for WLAN routers outlined above. Also here a pre-configuration of the CSG ID (28 bits) and the "Home NodeB Name" (1..48 character) similar to SSID/PSK as for WLAN by the manufacturer / seller is possible. The other principles to make the configured CSG ID / "Home NodeB Name" visible in form of a QR-code are also the same as outlined for WLAN above.

For application with CSG cells (femtoscells) the method allows to selectively search for available CSG cells in the 3GPP defined procedure called "support for manual CSG ID selection" [3GPP TS 36.304]. It can also be utilised to automatically configure the CSG ID into the terminal and allows subscribed users to automatically gain access to a particular CSG / femtocell.

Another embodiment of the present invention relates to pre-paid cards of cellular operators. So instead of providing / selling XtraCash in form of cards with a printed number which needs to be typed into the terminal for pre-paid cash activation it is proposed to provide a camera readable barcode, preferably a QR-code, on the pre-paid cash card (e.g. the Xtra CashCard of Deutsche Telekom) and allow the end customer to simply take a picture of the QR-code to automatically activate the pre-paid money on the customers pre-paid contract. Further variants of this method also include the presentation of the camera readable QR-code online (i.e. the internet) or by specific terminals with display capabilities.

## Claims

1. Method for controlling a communication device (10), wherein the communication device (10) is in communication with an image capture device (12), wherein the communication device (10) comprises a data processor (11), wherein a plurality of images (51, 52, 53) comprising a visual code (60) is captured by the image capture device (12), wherein the visual code (60) of the plurality of images (51, 52, 53) is decoded by a decoding application that is executed by the data processor (11), wherein the visual code (60) comprises computer-readable commands used to control the communication device (10), wherein the plurality of images (51, 52, 53) are displayed at least partly concurrently, and wherein the plurality of images (51, 52, 53) that are displayed concurrently are captured either by moving the image capture device (12) of the communication device (10) or by analogously processing a still image comprising the plurality of images (51, 52, 53).

2. Method according to claim 1, wherein the visual code (60) comprises computer-readable commands such that the configuration of the communication device (10) is controlled by the computer-readable commands.

3. Method according to claim 1, wherein the plurality of images (51, 52, 53) are displayed sequentially on a display device (22) of a further communication device (20).

4. Method according to claim 3, wherein the plurality of images (51, 52, 53) are displayed in the form of a video sequence.

5. Method according to claim 1, wherein the plurality of images (51, 52, 53) are displayed at least partly concurrently.

6. Method according to claim 1, wherein the plurality of images (51, 52, 53) is displayed on a display device (22) of a further communication device (20).

7. Method according to claim 1, wherein the computer-readable commands are at least one out of:
-- macros, preferably configuration macros, according to a configuration macro language,
-- lines of programming language code such as lines of Python-Code and/or lines of Java-Code and/or lines of JScript-Code.

8. Method according to claim 1, wherein the communication device (10) comprises a memory device (13) for storing at least one out of a menu structure, a registry structure, and a configuration file, wherein the configuration of the communication device (10) is defined by the state of the memory device (13), and wherein the computer-readable commands are used to modify the state of the memory device (13) for defining a configuration of the communication device (10).

9. Communication device (10), wherein the communication device (10) is in communication with an image capture device (12), wherein the communication device (10) comprises a data processor (11), wherein a plurality of images (51, 52, 53) comprising a visual code (60) is captured by the image capture device (12), wherein the visual code (60) is decoded by a decoding application that is executed by the data processor (11), wherein the visual code (60) comprises computer-readable commands usable to control the communication device (10), wherein the communication device (10) is provided such that a concurrent representation of at least part of the plurality of images (51, 52, 53) is captured either by moving the image capture device (12) of the communication device (10) or by analogously processing a still image comprising the plurality of images (51, 52, 53).

10. Communication device (10) according to claim 9, wherein the computer-readable commands comprise a complete program code executable on the communication device (10).

11. Communication device (10) according to claim 9, wherein the computer-readable commands are at least one out of:
-- macros, preferably configuration macros, according to a configuration macro language,
-- lines of programming language code such as lines of Python-Code and/or lines of Java-Code and/or lines of JScript-Code.

12. Communication device (10) according to claim 9, wherein the communication device (10) comprises a memory device (13) for storing at least one out of a menu structure, a registry structure, and a configuration file, wherein the configuration of the communication device (10) is defined by the state of the memory device (13), and wherein the computer-readable commands are used to modify the state of the memory device (13) for defining a configuration of the communication device (10).

13. System for controlling a communication device (10), wherein the system comprises a further communication device (20) comprising a display device (22), wherein the communication device (10) is in communication with an image capture device (12), wherein the communication device (10) comprises a data processor (11), wherein a plurality of images (51, 52, 53) comprising a visual code (60) is displayed by the display device (22) and captured by the image capture device (12), wherein the visual code (60) is decoded by a decoding application that is executed by the data processor (11), wherein the visual code (60) comprises computer-readable commands used to control the communication device (10), wherein the communication device (10) is provided such that a concurrent representation of at least part of the plurality of images (51, 52, 53) is captured either by moving the image capture device (12) of the communication device (10) or by analogously processing a still image comprising the plurality of images (51, 52, 53).

14. Computer program product comprising a computer-readable storage medium having computer-readable program instructions embodied in the medium for executing a method according to one of claims 1 to 8 or for controlling a communication device (10) according to one of claims 9 to 12.
